# EUROPEAN PATENT APPLICATION

(11) **EP 4 738 227 A1**
(43) Date of publication of application: **06.05.2026**
(21) Application number: 23943284.2
(22) Date of filing: 06.11.2023
(51) Int. Cl.: G06Q 30/0601, G06F 16/901, G06F 16/9035, G06F 16/9038

(54) **RECIPE RECOMMENDATION METHOD, RECIPE RECOMMENDATION APPARATUS, AND READABLE STORAGE MEDIUM**

(30) Priority: 30.06.2023 CN 202310788360
(71) Applicant: Guangdong Midea Kitchen Appliances Manufacturing Co., Ltd., Foshan, Guangdong 528311 (CN)
(72) Inventor: QIAN, Zhida, Foshan, Guangdong 528311 (CN); SUN, Yuwen, Foshan, Guangdong 528311 (CN)
(74) Representative: RGTH
(86) International application number: PCT/CN2023/130012
(87) International publication number: WO 2025/000805

(57) **Abstract**

The present application provides a recipe recommendation method, a recipe recommendation apparatus, and a readable storage medium. The recipe recommendation method comprises: acquiring preparation condition information for a cooking process; acquiring first demand information of a user; and generating a recommendation list on the basis of the preparation condition information and the first demand information, wherein the preparation condition information comprises at least one of cooking device type information, food ingredient type information and food ingredient remaining amount information which are used for the cooking process.

## Description

### CROSS-REFERENCE TO RELATED APPLICATIONS

This application claims priority to Chinese Patent Application No. 202310788360.1 filed with the China National Intellectual Property Administration on June 30, 2023 and entitled "RECIPE RECOMMENDATION METHOD, RECIPE RECOMMENDATION APPARATUS, AND READABLE STORAGE MEDIUM", the entire contents of which are herein incorporated by reference.

### FIELD

The present application relates to the technical field of household electrical appliances, and specifically relates to a recipe recommendation method, a recipe recommendation apparatus, and a computer-readable storage medium.

### BACKGROUND

In related technologies, during a recipe recommendation process, recipes can be recommended based on the demand information input by users. However, while the recommended recipes meet the users' needs, there is often a situation where users are unable to implement the selected recipes, which affects user experience.

### SUMMARY

The present application aims to solve at least one of the technical problems existing in the prior art.

Thus, a first aspect of the present application provides a recipe recommendation method.

A second aspect of the present application provides a recipe recommendation apparatus.

A third aspect of the present application provides a recipe recommendation apparatus.

A fourth aspect of the present application provides a computer-readable storage medium.

The first aspect of the present application provides a recipe recommendation method, comprising: obtaining preparation condition information for a cooking process; obtaining first demand information of a user; and generating a recommendation list on the basis of the preparation condition information and the first demand information, wherein the preparation condition information comprises at least one of cooking device type information, food ingredient type information and food ingredient remaining amount information which are for the cooking process.

The recipe recommendation method provided by the present application can be used to recommend recipes corresponding to users' needs to meet their cooking requirements. Users can input their cooking needs through an intelligent device, and the intelligent device can then recommend a list of recipes based on the users' needs for them to select the desired ones from the list.

First, the preparation condition information for the cooking process is obtained. Wherein, the preparation condition information can comprise cooking device type information used in the cooking process, for example, the cooking device types available in the user's kitchen, such as a rice cooker, an oven, a microwave oven, or an electric grill. Furthermore, the preparation condition information can further comprise food ingredient type information, that is, the different food ingredients that can be obtained by users, for example, different types of food ingredients in the refrigerator in the user's kitchen, such as chicken, pork, fish, or various types of vegetables. Furthermore, the preparation condition information can further comprise food ingredient remaining amount information, that is, the remaining amount of food ingredients that can be obtained by the user, for example, the remaining amount of chicken or various vegetables in the refrigerator in the user's kitchen.

By obtaining the preparation condition information, during the recipe recommendation process, recipes in the recipe list can be selected based on the preparation condition information of the user. This ensures that the recipe chosen by the user can be implemented under the current preparation conditions and improves the accuracy of recipe recommendation.

Wherein, the preparation condition information can be obtained in an intelligent ecological environment established by the user's household electrical appliances. The intelligent ecological environment refers to the intelligent ecological environment formed on the basis of the user's use of a series of intelligently connected devices, and all intelligent device information can be obtained from a unified control platform. Each intelligent device can transmit device information, device operation status information, and various other information in the user's home such as temperature, humidity, air quality, as well as the information of food ingredients contained in the refrigerator, shelf life, etc., to a control terminal through the local area network, thus facilitating the unified management of the user's home environment. Thus, before recommending recipes, the preparation condition information for the user's cooking process can be determined from the intelligent ecological environment.

Furthermore, the first demand information of the user is obtained. The first demand information of the user refers to the user's requirements for the dishes to be prepared. It can comprise the type of dishes, such as cold dishes, fried foods, and roasted foods. It can further comprise the taste of the dishes, such as sweet taste and spicy taste. Additionally, the first demand information can comprise basic information of the user, such as age, gender, and other information.

Furthermore, after the preparation condition information for the cooking process and the first demand information input by the user are obtained, a recommendation list can be generated based on the preparation condition information and the first demand information. In this way, users can select the food they want to prepare from the generated recommendation list. By generating the recommendation list based on the preparation condition information and the first demand information input by the user, firstly, users do not need to manually select, the automatic generation of the recipe recommendation list is realized and the efficiency of recipe recommendation is improved. Secondly, when the user's needs are met, in combination with the preparation condition information of the user's kitchen, this ensures implementing all recipes in the recommendation list obtained by the user, and then ensures the accuracy of recipe recommendation, and enhances user experience.

The recipe recommendation method provided in the present application first obtains the preparation condition information for the cooking process during the recipe recommendation process, and thereby ensures that the recipes recommended to the user can be implemented in the user's kitchen environment. Furthermore, the recommendation list is generated by combining the preparation condition information with the first demand information input by the user. This not only realizes the automatic generation of the recommendation list and improves the efficiency of recipe recommendation, but further enables the recommendation list to meet the user's needs and ensures implementing all recipes in the recommendation list obtained by the user in combination with the preparation condition information of the user's kitchen at the same time, thus ensuring the accuracy of recipe recommendation and enhancing user experience.

In addition, the recipe recommendation method according to the above technical solution provided by the present application can further comprise the following additional technical features:

In the above technical solution, the recommendation list comprises a first recommendation list. Generating the recommendation list based on the preparation condition information and the first demand information comprises: generating a recipe list based on the preparation condition information; determining first keywords based on the first demand information; and generating a first recommendation list based on the first keywords and the recipe list.

In the technical solution, during the process of generating the recommendation list based on the preparation condition information and the first demand information of the user, first, a recipe list is generated based on the preparation condition information. That is to say, the recipes that meet the current preparation conditions of the user are first selected out, and all the recipes displayed in this recipe list can be implemented.

Then, the first keywords are determined based on the first demand information input by the user. That is to say, keywords that can characterize the user's actual needs are extracted from the first demand information input by the user.

Furthermore, the previously generated recipe list is selected based on the first keywords to obtain the first recommendation list. The first recommendation list is the recipe list recommended to the user based on the preparation condition information and the first demand information of the user, allowing the user to select a desired recipe from the recommendation list.

In some technical solutions, generating the first recommendation list based on the first keywords and the recipe list comprises: determining second keywords conflicting with the preparation condition information among the first keywords; obtaining confirmation information input by the user in the case that the second keywords are obtained; generating the first recommendation list based on the first keywords and the recipe list in the case that the confirmation information is obtained; deleting the second keywords from the first keywords in the case that the confirmation information is not obtained; and generating the first recommendation list based on the remaining first keywords and the recipe list.

In the technical solution, after the corresponding first keywords are determined based on the first demand information input by the user, whether there are second keywords in the first keywords conflicting with the preparation condition information are determined first.

Furthermore, in the case that the second keywords are obtained, it is further necessary to obtain the confirmation information of the user. The confirmation information is configured to ask the user whether to continue generating the recommendation list using the keywords as the user's requirements. In the case that the confirmation information of the user is obtained, it indicates that the user still needs to use the keywords as the user's requirements for recipe recommendation. In this case, no other operation is required, and the first recommendation list is directly generated based on the first keywords and the recipe list.

If the confirmation information of the user is not obtained, it indicates that the user no longer needs to generate the recommendation list using the keywords as the demand information. In this case, the second keywords are deleted from the first keywords, that is, the second keywords in the first keywords that conflict with the preparation condition information are deleted. Then, the first recommendation list is generated based on the remaining first keywords and the recipe list. This ensures that all recipes in the generated first recommendation list can be implemented and enhances the user experience.

In some technical solutions, determining the first keywords based on the first demand information comprises determining the first keywords corresponding to the first demand information from a preset keyword list based on the first demand information.

In the technical solution, during the process of determining the first keywords based on the first demand information input by the user, the first keywords corresponding to the first demand information input by the user can be determined from the preset keyword list.

By determining the first keywords corresponding to the first demand information input by the user from the preset keyword list, the first keywords can be determined intuitively, to improve the efficiency of determining the first keywords.

In some technical solutions, determining the first keywords based on the first demand information comprises inputting the first demand information into a pre-trained deep learning algorithm to generate the first keywords corresponding to the first demand information.

In the technical solution, during the process of determining the first keywords based on the first demand information input by the user, the first demand information input by the user can be directly input into the pre-trained deep learning algorithm. Then, through the computing of the deep learning algorithm, the first keywords corresponding to the first demand information are obtained.

The deep learning algorithm can be a keyword extraction algorithm or an intent recognition model.

By inputting the first demand information into the pre-trained deep learning algorithm to determine the first keywords corresponding to the first demand information, the accuracy of determining the first keywords can be improved, and thereby the accuracy of user demand obtainment is ensured. Furthermore, this guarantees that the recipes in the generated first recommendation list are more in line with the user's needs and enhances the user experience.

In some technical solutions, the recommendation list further comprises a second recommendation list. After the first recommendation list is generated based on the first keywords and the recipe list, the recipe recommendation method further comprises: obtaining second demand information of the user; determining third keywords based on the second demand information in the case that the second demand information input by the user is received; generating a second recommendation list based on the third keywords and the recipe list; and stopping obtaining the second demand information in the case that the user has determined a target recipe from the first recommendation list.

In the technical solution, after the first recommendation list is generated based on the first keywords corresponding to the first demand information of the user and the preparation condition information, the second demand information input by the user can be further obtained.

That is to say, in the case that the target recipe required by the user does not exist in the first recommendation list, i.e., in the case that the user has not chosen the desired target recipe from the first recommendation list, the user can further input the second demand information. Based on the second demand information input by the user, the third keywords corresponding to the second demand information are then determined, and then the second recommendation list is generated on the basis of the third keywords and the generated recipe list. At the moment, the user can choose the target recipe meeting their needs from the second recommendation list.

By obtaining the second demand information of the user, then in the case that the recommendation list generated based on the first demand information of the user and preparation condition information fails to meet the user's needs, a further recommendation list can be generated on the basis of the second demand information of the user and preparation condition information, to ensure that the generated recommendation list contains recipes that meet the user's needs and enhances the user experience.

Correspondingly, in the case that the user has determined a target recipe from the first recommendation list, that is, there is no needs to continue obtaining the second demand information of the user, then the recipe recommendation is completed.

In some technical solutions, after the recommendation list is generated based on the preparation condition information and the first demand information, the recommendation method further comprises: obtaining historical cooking information of a user; determining the priority of the recipes in the recommendation list based on the historical cooking information; and sorting the recipes in the recommendation list by priority.

In the technical solution, after the recommendation list is generated based on the preparation condition information and the first demand information of the user, a plurality of recipes in the recommendation list can be further sorted based on the historical cooking information of the user. The historical cooking information of the users can reflect their cooking preferences, and by further sorting the plurality of recipes in the recommendation list based on the user's preferences, it is more convenient for the user to browse and select.

First, the historical cooking information of the user is obtained, wherein the historical cooking information can comprise the user's historical recipe interaction behaviors, for example, the information relevant to the recipes that have been cooked by the user previously and the number of times of cooking the recipe by the user.

Then, based on the historical cooking information of the user, the priority of all recipes in the generated recommendation list is determined, and all recipes in the recommendation list are sorted based on the priority for the user to browse.

Furthermore, all recipes in the recommendation list can be sorted based on other information. For example, the priority of all recipes in the recommendation list is determined based on the user's taste preferences. In some embodiments, the sorting method for the recipes is determined based on the similarity of the main food ingredients of all recipes in the recommendation list, for example, recipes with the same or similar main food ingredients are grouped together to facilitate the user's recipe selection based on main food ingredients. Or, the sorting method for the recipes is determined based on the taste similarity of all recipes in the recommendation list, for example, recipes with the same or similar tastes are grouped together to facilitate the user's recipe selection based on taste.

In some technical solutions, determining the priority of the recipes in the recommendation list based on the historical cooking information comprises: constructing a historical cooking information matrix based on the historical cooking information; and inputting the historical cooking information matrix into a preset algorithm to generate the priority of the recipes in the recommendation list.

In the technical solution, the historical cooking information matrix can be constructed based on the historical cooking information of the user. The user's historical recipe interaction behaviors, for example, the information such as the recipes that have been cooked by the user previously and the number of times of cooking the recipe by the user, are constructed to be the historical cooking information matrix, which is subsequently input into a preset algorithm. Through the computing of the preset algorithm, the priority of the recipes in the recommendation list is determined.

The preset algorithm can be a collaborative filtering algorithm.

In some technical solutions, obtaining the first demand information of the user comprises: obtaining voice information input by the user; converting the voice information into text information; and determining the first demand information based on the text information.

In the technical solution, the user can interact with the intelligent device through voice, and this enables the intelligent device to determine the first demand information of the user based on the voice information input by the user.

First, the voice information input by the user is obtained, then the voice information input by the user is converted into text information, and finally, the first demand information of the user is determined based on the text information. Voice interaction allows users to conveniently express their real-time recipe search needs, and realizes convenient interaction for users' recipe search requirements.

According to a second aspect of the present application, a recipe recommendation apparatus is provided, comprising: an obtaining unit configured to obtain preparation condition information for the cooking process and obtaining first demand information of a user; a generating unit configured to generate a recommendation list based on the preparation condition information and the first demand information; wherein the preparation condition information comprises at least one of cooking device type information, food ingredient type information, and food ingredient remaining amount information for the cooking process.

The recipe recommendation apparatus provided in the present application first obtains preparation condition information for the cooking process during the recipe recommendation process, and thereby can ensure that the recipes recommended to the user can be implemented in the user's kitchen environment. Furthermore, the preparation condition information is combined with the first demand information input by the user to generate the recommendation list. This not only realizes the automatic generation of the recommendation list and improves the efficiency of recipe recommendation, but further enables the recommendation list to meet the user's needs and ensures implementing all recipes in the recommendation list obtained by the user in combination with the preparation condition information of the user's kitchen at the same time, thus ensuring the accuracy of recipe recommendation and enhancing user experience.

Furthermore, the generating unit is configured to: generate a recipe list based on the preparation condition information; determine first keywords based on the first demand information; and generate a first recommendation list based on the first keywords and the recipe list.

Furthermore, the generating unit is further configured to determine second keywords conflicting with the preparation condition information among the first keywords. The obtaining unit is further configured to obtain confirmation information input by the user in the case that the second keywords are obtained. The generating unit is further configured to: generate the first recommendation list based on the first keywords and the recipe list in the case that the confirmation information is obtained; delete the second keywords from the first keywords in the case that the confirmation information is not obtained; and generate the first recommendation list based on the remaining first keywords and the recipe list.

Furthermore, the generating unit is further configured to determine the first keywords corresponding to the first demand information from a preset keyword list based on the first demand information.

Furthermore, the generating unit is further configured to input the demand information into a pre-trained deep learning algorithm to generate the first keywords corresponding to the first demand information.

Furthermore, the obtaining unit is further configured to obtain the second demand information of the user; the generating unit is further configured to, upon receiving the second demand information input by the user, determine third keywords based on the second demand information, and generate a second recommendation list based on the third keywords and the first recommendation list. The obtaining unit stops obtaining the second demand information in the case that the user has determined a target recipe from the first recommendation list.

Furthermore, after the recommendation list is generated based on the preparation condition information and the first demand information, the obtaining unit is further configured to obtain the user's historical cooking information.

The recipe recommendation apparatus further comprises a sorting unit configured to determine the priority of the recipes in the recommendation list based on the historical cooking information, and sort the recipes in the recommendation list by priority.

Furthermore, the sorting unit is configured to construct a historical cooking information matrix based on the historical cooking information, and input the historical cooking information matrix into a preset algorithm to generate the priority of the recipes in the recommendation list.

Furthermore, the obtaining unit is configured to obtain the voice information input by the user, convert the voice information into text information, and determine the first demand information based on the text information.

According to a third aspect of the present application, a recipe recommendation apparatus is provided, comprising: a processor and a memory, wherein the memory stores a programs or an instruction which can run in the processor, and when executed by the processor, the program or instruction implements the steps of the recipe recommendation method provided in the first aspect.

The recipe recommendation apparatus provided in the present application comprises a memory, a processor, and a program or an instruction stored in the memory. When the program or instruction is executed by the processor, the steps of the recipe recommendation method according to the first aspect described above can be implemented. Therefore, the recipe recommendation apparatus has all the beneficial effects of the above recipe recommendation method, which will not be repeated here.

According to a fourth aspect of the present application, a computer-readable storage medium is provided, and a program or an instruction is stored in the computer-readable storage medium. When the program or instruction is executed by a processor, the recipe recommendation method according to any one of the above technical solutions is implemented.

The computer-readable storage medium provided in the present application stores a program or an instruction therein. When executed by a processor, the program or instruction can implement the recipe recommendation method according to any one of the above technical solutions, therefore, the storage medium has all the beneficial effects of the aforementioned recipe recommendation method, which will not be repeated here.

The additional aspects and advantages of the present application will become apparent in the following description or may be learned through practice of the present application.

### BRIEF DESCRIPTION OF THE DRAWINGS

The above-mentioned and/or additional aspects and advantages of the present application will become apparent and easily understandable from the description of the embodiments in conjunction with the following accompanying drawings, wherein:
FIG. 1 shows a flow chart of a recipe recommendation method according to an embodiment of the present application;
FIG.2 shows a flow chart of a recipe recommendation method according to another embodiment of the present application;
FIG.3 shows a flow chart of a recipe recommendation method according to another embodiment of the present application;
FIG.4 shows a flow chart of a recipe recommendation method according to another embodiment of the present application;
FIG.S shows a flow chart of a recipe recommendation method according to another embodiment of the present application;
FIG.6 shows a flow chart of a recipe recommendation method according to another embodiment of the present application;
FIG.7 shows a flow chart of a recipe recommendation method according to another embodiment of the present application;
FIG.8 shows a flow chart of a recipe recommendation method according to another embodiment of the present application; and
FIG.9 shows a block diagram of the flow of a recipe recommendation method according to an embodiment of the present application.

### DETAILED DESCRIPTION OF THE APPLICATION

To more clearly understand the above purposes, features and advantages of the present application, the present application will be further detailed hereinafter in combination with the accompanying drawings and embodiments. It should be indicated that in the case of no conflict, the embodiments and the features in the embodiments of the present application can be combined with each other.

Many details are illustrated in the following description for the convenience of a thorough understanding to the present application, but the present application can further be implemented using other embodiments other than these described herein. Therefore, the protection scope of the present application is not limited to the specific embodiments disclosed in the following text.

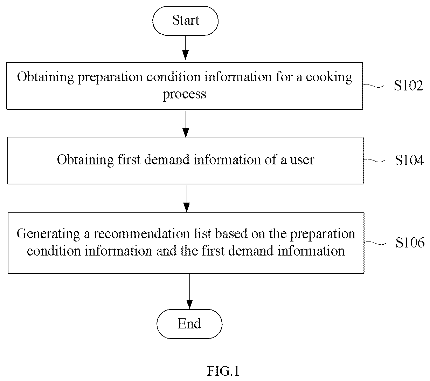

A recipe recommendation method, a recipe recommendation apparatus, and a computer-readable storage medium according to some embodiments of the present application are described hereinafter by referring to FIG. 1 to FIG.9.

As shown in FIG. 1, according to an embodiment of the present application, a recipe recommendation method is provided, comprising:
S102, obtaining preparation condition information for a cooking process;
S104, obtaining first demand information of a user; and
S106, generating a recommendation list on the basis of the preparation condition information and the first demand information,
wherein the preparation condition information comprises at least one of cooking device type information, food ingredient type information and food ingredient remaining amount information which are for the cooking process.

The recipe recommendation method provided by the present application can be used to recommend recipes corresponding to users' needs to meet their cooking requirements. Users can input their cooking needs through an intelligent device, and the intelligent device can then recommend a list of recipes based on the users' needs for them to select the desired ones from the list.

First, the preparation condition information for the cooking process is obtained. Wherein, the preparation condition information can comprise cooking device type information used in the cooking process, for example, the cooking device types available in the user's kitchen, such as a rice cooker, an oven, a microwave oven, or an electric grill. Furthermore, the preparation condition information can further comprise food ingredient type information, that is, the different food ingredients that can be obtained by users, for example, different types of food ingredients in the refrigerator in the user's kitchen, such as chicken, pork, fish, or various types of vegetables. Furthermore, the preparation condition information can further comprise food ingredient remaining amount information, that is, the remaining amount of food ingredients that can be obtained by the user, for example, the remaining amount of chicken or various vegetables in the refrigerator in the user's kitchen.

By obtaining the preparation condition information, during the recipe recommendation process, recipes in the recipe list can be selected based on the preparation condition information of the user. This ensures that the recipe chosen by the user can be implemented under the current preparation conditions and improves the accuracy of recipe recommendation.

Wherein, the preparation condition information can be obtained in an intelligent ecological environment established by the user's household electrical appliances. The intelligent ecological environment refers to the intelligent ecological environment formed on the basis of the user's use of a series of intelligently connected devices, and all intelligent device information can be obtained from a unified control platform. Each intelligent device can transmit device information, device operation status information, and various other information in the user's home such as temperature, humidity, air quality, as well as the information of food ingredients contained in the refrigerator, shelf life, etc., to a control terminal through the local area network, thus facilitating the unified management of the user's home environment. Thus, before recommending recipes, the preparation condition information for the user's cooking process can be determined from the intelligent ecological environment.

In some embodiments, for the preparation condition information, the user's active input of existing cooking device conditions is received and a food ingredient management table is updated regularly to ensure that the system can obtain the preparation condition information for cooking.

Furthermore, the first demand information of the user is obtained. The first demand information of the user refers to the user's requirements for the dishes to be prepared. It can comprise the type of dishes, such as cold dishes, fried foods, and roasted foods. It can further comprise the taste of the dishes, such as sweet taste and spicy taste. Additionally, the first demand information can comprise basic information of the user, such as age, gender, and other information.

Furthermore, after the preparation condition information for the cooking process and the first demand information input by the user are obtained, a recommendation list can be generated based on the preparation condition information and the first demand information. In this way, users can select the food they want to prepare from the generated recommendation list. By generating the recommendation list based on the preparation condition information and the first demand information input by the user, firstly, users do not need to manually select, the automatic generation of the recipe recommendation list is realized and the efficiency of recipe recommendation is improved. Secondly, when the user's needs are met, in combination with the preparation condition information of the user's kitchen, this ensures implementing all recipes in the recommendation list obtained by the user, and then ensures the accuracy of recipe recommendation, and enhances user experience.

The recipe recommendation method provided in the present application first obtains the preparation condition information for the cooking process during the recipe recommendation process, and thereby ensures that the recipes recommended to the user can be implemented in the user's kitchen environment. Furthermore, the recommendation list is generated by combining the preparation condition information with the first demand information input by the user. This not only realizes the automatic generation of the recommendation list and improves the efficiency of recipe recommendation, but further enables the recommendation list to meet the user's needs and ensures implementing all recipes in the recommendation list obtained by the user in combination with the preparation condition information of the user's kitchen at the same time, thus ensuring the accuracy of recipe recommendation and enhancing user experience.

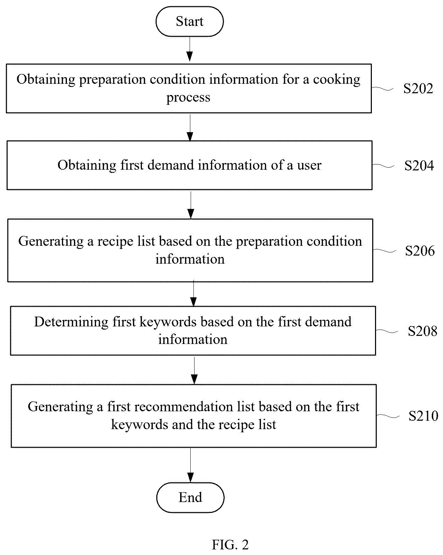

According to an embodiment of the present application, as shown in FIG. 2, a recipe recommendation method is provided, comprising:
S202, obtaining preparation condition information for a cooking process;
S204, obtaining first demand information of a user;
S206, generating a recipe list based on the preparation condition information;
S208, determining first keywords based on the first demand information; and
S210, generating a first recommendation list based on the first keywords and the recipe list.

In the embodiment, during the process of generating the recommendation list based on the preparation condition information and the first demand information of the user, first, a recipe list is generated based on the preparation condition information. That is to say, the recipes that meet the current preparation conditions of the user are first selected out, and all the recipes displayed in this recipe list can be implemented.

Then, the first keywords are determined based on the first demand information input by the user. That is to say, keywords that can characterize the user's actual needs are extracted from the first demand information input by the user.

For example, if the first demand information of the user is "I have a cold today, and what should I eat? Further, I'm in a bad mood and want something sweet, a dessert made with strawberries", at this time, the types of keywords can be respectively determined as "common illness", "mood", "taste", "dish type", and "food ingredient" based on the first demand information, and the keywords of the first demand information are further determined as "cold", "sad", "sweet", "dessert", and "strawberry".

Furthermore, the previously generated recipe list is selected based on the first keywords to obtain the first recommendation list. The first recommendation list is the recipe list recommended to the user based on the preparation condition information and the first demand information of the user, allowing the user to select a desired recipe from the recommendation list.

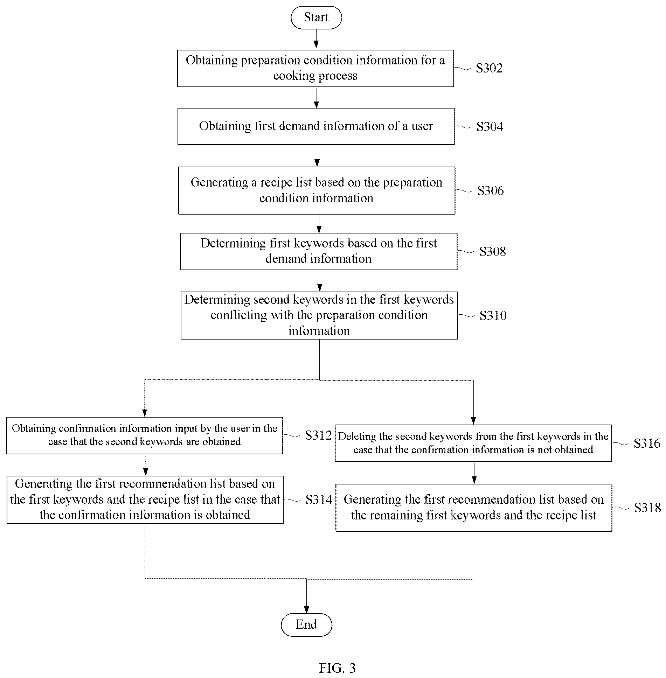

According to an embodiment of the present application, as shown in FIG. 3, a recipe recommendation method is provided, comprising:
S302, obtaining preparation condition information for a cooking process;
S304, obtaining first demand information of a user;
S306, generating a recipe list based on the preparation condition information;
S308, determining first keywords based on the first demand information;
S310, determining second keywords conflicting with the preparation condition information among the first keywords;
S312, obtaining confirmation information input by the user in the case that the second keywords are obtained;
S314, generating the first recommendation list based on the first keywords and the recipe list in the case that the confirmation information is obtained;
S316, deleting the second keywords from the first keywords in the case that the confirmation information is not obtained; and
S318, generating the first recommendation list based on the remaining first keywords and the recipe list.

In the embodiment, after the corresponding first keywords are determined based on the first demand information input by the user, whether there are second keywords in the first keywords conflicting with the preparation condition information are determined first.

For example, if the first demand information of the user is "I have a cold today, and what should I eat? Further, I'm in a bad mood and want something sweet, a dessert made with strawberries", at this time, the types of keywords can be respectively determined as "common illness", "mood", "taste", "dish type", and "food ingredient" based on the first demand information, and the keywords of the first demand information are further determined as "cold", "sad", "sweet", "dessert", and "strawberry". However, the food ingredient "strawberry" is not found in the preparation condition information. At this time, it can be determined that "strawberry" in the first keywords is the second keyword conflicting with the preparation condition information.

Furthermore, in the case that the second keywords are obtained, it is further necessary to obtain the confirmation information of the user. The confirmation information is configured to ask the user whether to continue generating the recommendation list using the keywords as the user's requirements. In the case that the confirmation information of the user is obtained, it indicates that the user still needs to use the keywords as the user's requirements for recipe recommendation. In this case, no other operation is required, and the first recommendation list is directly generated based on the first keywords and the recipe list.

If the confirmation information of the user is not obtained, it indicates that the user no longer needs to generate the recommendation list using the keywords as the demand information. In this case, the second keywords are deleted from the first keywords, that is, the second keywords in the first keywords that conflict with the preparation condition information are deleted. Then, the first recommendation list is generated based on the remaining first keywords and the recipe list. This ensures that all recipes in the generated first recommendation list can be implemented and enhances the user experience.

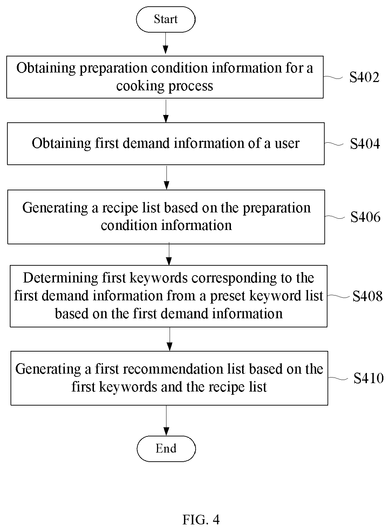

According to an embodiment of the present application, as shown in FIG. 4, a recipe recommendation method is provided, comprising:
S402, obtaining preparation condition information for a cooking process;
S404, obtaining first demand information of a user;
S406, generating a recipe list based on the preparation condition information;
S408, determining the first keywords corresponding to the first demand information from a preset keyword list based on the first demand information;
S410, generating the first recommendation list based on the first keywords and the recipe list.

In the embodiment, during the process of determining the first keywords based on the first demand information input by the user, the first keywords corresponding to the first demand information input by the user can be determined from the preset keyword list.

In the first keyword list, a plurality of first keywords can be classified based on keyword types. For example, the keyword types can comprise "common illness", "mood", "taste", "dish type", "ingredient", and the like. Furthermore, each keyword type can comprise a plurality of specific first keywords. For example, the "taste" type can comprise first keywords such as "sour", "sweet", "spicy", and "salty".

By determining the first keywords corresponding to the first demand information input by the user from the preset keyword list, the first keywords can be determined intuitively, to improve the efficiency of determining the first keywords.

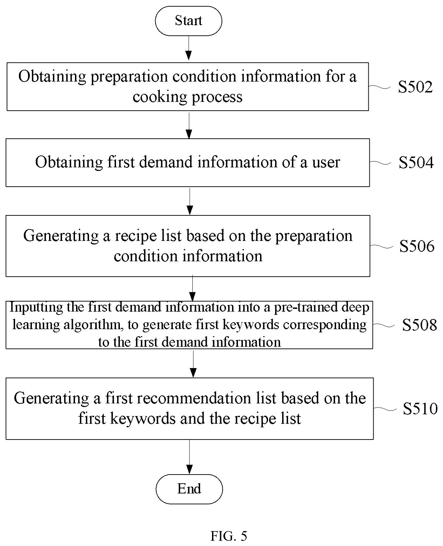

According to an embodiment of the present application, as shown in FIG. 5, a recipe recommendation method is provided, comprising:
S502, obtaining preparation condition information for a cooking process;
S504, obtaining first demand information of a user;
S506, generating a recipe list based on the preparation condition information;
S508, inputting the first demand information into a pre-trained deep learning algorithm to generate the first keywords corresponding to the first demand information; and
S510, generating the first recommendation list based on the first keywords and the recipe list.

In the embodiment, during the process of determining the first keywords based on the first demand information input by the user, the first demand information input by the user can be directly input into the pre-trained deep learning algorithm. Then, through the computing of the deep learning algorithm, the first keywords corresponding to the first demand information are obtained.

The deep learning algorithm can be a keyword extraction algorithm or an intent recognition model.

By inputting the first demand information into the pre-trained deep learning algorithm to determine the first keywords corresponding to the first demand information, the accuracy of determining the first keywords can be improved, and thereby the accuracy of user demand obtainment is ensured. Furthermore, this guarantees that the recipes in the generated first recommendation list are more in line with the user's needs and enhances the user experience.

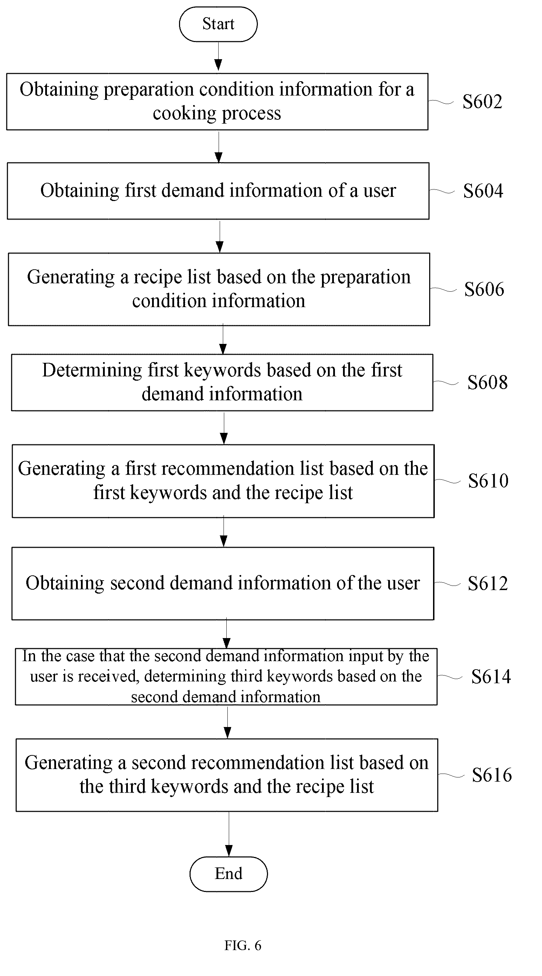

According to an embodiment of the present application, as shown in FIG. 6, a recipe recommendation method is provided, comprising:
S602, obtaining preparation condition information for a cooking process;
S604, obtaining first demand information of a user;
S606, generating a recipe list based on the preparation condition information;
S608, determining first keywords based on the first demand information;
S610, generating a first recommendation list based on the first keywords and the recipe list;
S612, obtaining second demand information of the user;
S614, determining third keywords based on the second demand information in the case that the second demand information input by the user is received; and
S616, generating a second recommendation list based on the third keywords and the recipe list.

In the embodiment, after the first recommendation list is generated based on the first keywords corresponding to the first demand information of the user and the preparation condition information, the second demand information input by the user can be further obtained.

That is to say, in the case that the target recipe required by the user does not exist in the first recommendation list, i.e., in the case that the user has not chosen the desired target recipe from the first recommendation list, the user can further input the second demand information. Based on the second demand information input by the user, the third keywords corresponding to the second demand information are then determined, and then the second recommendation list is generated on the basis of the third keywords and the generated recipe list. At the moment, the user can choose the target recipe meeting their needs from the second recommendation list.

By obtaining the second demand information of the user, then in the case that the recommendation list generated based on the first demand information of the user and preparation condition information fails to meet the user's needs, a further recommendation list can be generated on the basis of the second demand information of the user and preparation condition information, to ensure that the generated recommendation list contains recipes that meet the user's needs and enhances the user experience.

Correspondingly, in the case that the user has determined a target recipe from the first recommendation list, that is, there is no needs to continue obtaining the second demand information of the user, then the recipe recommendation is completed.

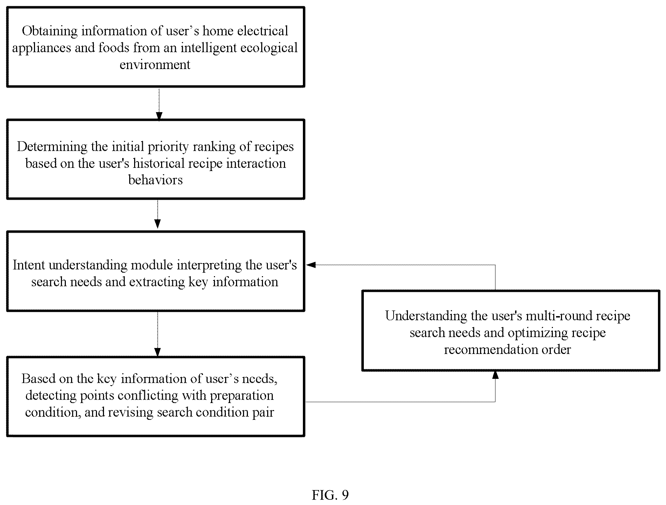

Furthermore, as shown in FIG. 9, if the second recommendation list still does not contain the recipe required by the user, the third demand information of the user can be continuously obtained at this time, and then a fourth recommendation list can be generated based on the third demand information and the recipe list. In this way, multi-round obtainment of the demand information of the user can be performed until the generated recommendation list contains the recipe required by the user, and then it is unnecessary to continue obtaining the demand information of the user.

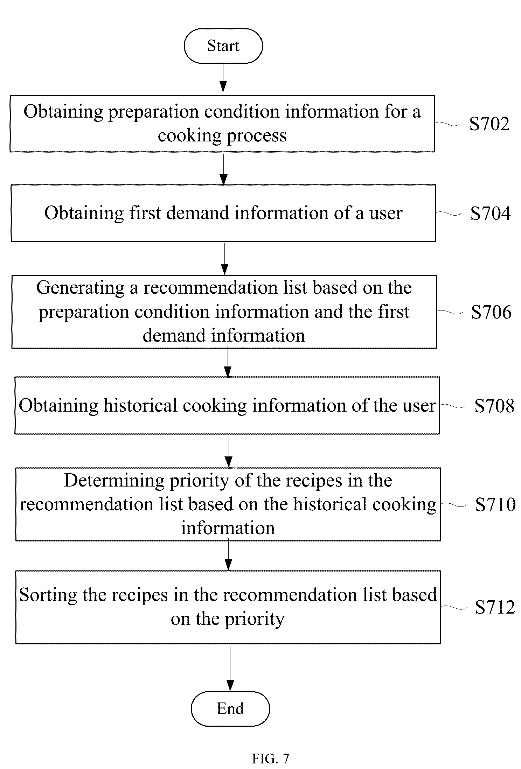

According to an embodiment of the present application, as shown in FIG. 7, a recipe recommendation method is provided, comprising:
S702, obtaining preparation condition information for a cooking process;
S704, obtaining first demand information of a user;
S706, generating a recommendation list based on the preparation condition information and the first demand information;
S708, obtaining historical cooking information of a user;
S710, determining the priority of the recipes in the recommendation list based on the historical cooking information; and
S712, sorting the recipes in the recommendation list by priority.

In the embodiment, after the recommendation list is generated based on the preparation condition information and the first demand information of the user, a plurality of recipes in the recommendation list can be further sorted based on the historical cooking information of the user. The historical cooking information of the users can reflect their cooking preferences, and by further sorting the plurality of recipes in the recommendation list based on the user's preferences, it is more convenient for the user to browse and select.

First, the historical cooking information of the user is obtained, wherein the historical cooking information can comprise the user's historical recipe interaction behaviors, for example, the information relevant to the recipes that have been cooked by the user previously and the number of times of cooking the recipe by the user.

Then, based on the historical cooking information of the user, the priority of all recipes in the generated recommendation list is determined, and all recipes in the recommendation list are sorted based on the priority for the user to browse.

Furthermore, all recipes in the recommendation list can be sorted based on other information. For example, the priority of all recipes in the recommendation list is determined based on the user's taste preferences. In some embodiments, the sorting method for the recipes is determined based on the similarity of the main food ingredients of all recipes in the recommendation list, for example, recipes with the same or similar main food ingredients are grouped together to facilitate the user's recipe selection based on main food ingredients. Or, the sorting method for the recipes is determined based on the taste similarity of all recipes in the recommendation list, for example, recipes with the same or similar tastes are grouped together to facilitate the user's recipe selection based on taste.

In some embodiments, determining the priority of the recipes in the recommendation list based on the historical cooking information comprises: constructing a historical cooking information matrix based on the historical cooking information; and inputting the historical cooking information matrix into a preset algorithm to generate the priority of the recipes in the recommendation list.

In the embodiment, the historical cooking information matrix can be constructed based on the historical cooking information of the user. The user's historical recipe interaction behaviors, for example, the information such as the recipes that have been cooked by the user previously and the number of times of cooking the recipe by the user, are constructed to be the historical cooking information matrix, which is subsequently input into a preset algorithm. Through the computing of the preset algorithm, the priority of the recipes in the recommendation list is determined.

The preset algorithm can be a collaborative filtering algorithm.

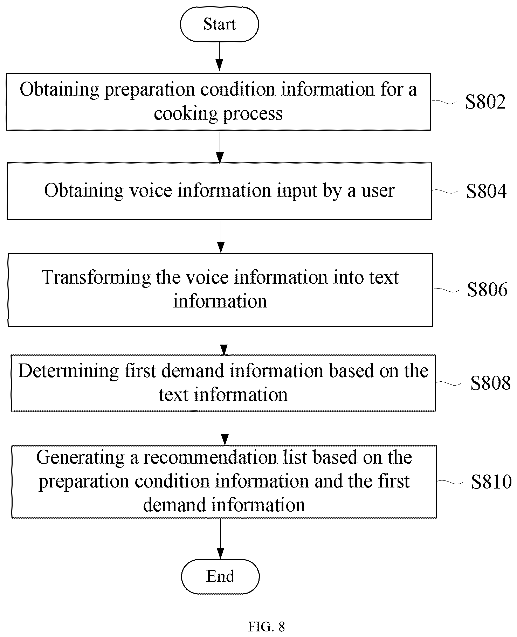

According to an embodiment of the present application, as shown in FIG. 8, a recipe recommendation method is provided, comprising:
S802, obtaining preparation condition information for a cooking process;
S804, obtaining voice information input by the user;
S806, converting the voice information into text information;
S808, determining a first demand information based on the text information; and
S810, generating a recommendation list based on the preparation condition information and the first demand information.

In the embodiment, the user can interact with the intelligent device through voice, and this enables the intelligent device to determine the first demand information of the user based on the voice information input by the user.

First, the voice information input by the user is obtained, then the voice information input by the user is converted into text information, and finally, the first demand information of the user is determined based on the text information. Voice interaction allows users to conveniently express their real-time recipe search needs, and realizes convenient interaction for users' recipe search requirements.

According to a second aspect of the present application, a recipe recommendation apparatus is provided, comprising: an obtaining unit configured to obtain preparation condition information for the cooking process and obtaining first demand information of a user; a generating unit configured to generate a recommendation list based on the preparation condition information and the first demand information; wherein the preparation condition information comprises at least one of cooking device type information, food ingredient type information, and food ingredient remaining amount information for the cooking process.

The recipe recommendation apparatus provided in the present application first obtains preparation condition information for the cooking process during the recipe recommendation process, and thereby can ensure that the recipes recommended to the user can be implemented in the user's kitchen environment. Furthermore, the preparation condition information is combined with the first demand information input by the user to generate the recommendation list. This not only realizes the automatic generation of the recommendation list and improves the efficiency of recipe recommendation, but further enables the recommendation list to meet the user's needs and ensures implementing all recipes in the recommendation list obtained by the user in combination with the preparation condition information of the user's kitchen at the same time, thus ensuring the accuracy of recipe recommendation and enhancing user experience.

Furthermore, the generating unit is configured to: generate a recipe list based on the preparation condition information; determine first keywords based on the first demand information; and generate a first recommendation list based on the first keywords and the recipe list.

Furthermore, the generating unit is further configured to determine second keywords conflicting with the preparation condition information among the first keywords. The obtaining unit is further configured to obtain confirmation information input by the user in the case that the second keywords are obtained. The generating unit is further configured to: generate the first recommendation list based on the first keywords and the recipe list in the case that the confirmation information is obtained; delete the second keywords from the first keywords in the case that the confirmation information is not obtained; and generate the first recommendation list based on the remaining first keywords and the recipe list.

Furthermore, the generating unit is further configured to determine the first keywords corresponding to the first demand information from a preset keyword list based on the first demand information.

Furthermore, the generating unit is further configured to input the demand information into a pre-trained deep learning algorithm to generate the first keywords corresponding to the first demand information.

Furthermore, the obtaining unit is further configured to obtain the second demand information of the user; the generating unit is further configured to, upon receiving the second demand information input by the user, determine third keywords based on the second demand information, and generate a second recommendation list based on the third keywords and the first recommendation list. The obtaining unit stops obtaining the second demand information in the case that the user has determined a target recipe from the first recommendation list.

Furthermore, after the recommendation list is generated based on the preparation condition information and the first demand information, the obtaining unit is further configured to obtain the user's historical cooking information.

The recipe recommendation apparatus further comprises a sorting unit configured to determine the priority of the recipes in the recommendation list based on the historical cooking information, and sort the recipes in the recommendation list by priority.

Furthermore, the sorting unit is configured to construct a historical cooking information matrix based on the historical cooking information, and input the historical cooking information matrix into a preset algorithm to generate the priority of the recipes in the recommendation list.

Furthermore, the obtaining unit is configured to obtain the voice information input by the user, convert the voice information into text information, and determine the first demand information based on the text information.

According to a third aspect of the present application, a recipe recommendation apparatus is provided, comprising: a processor and a memory, wherein the memory stores a program or an instruction which can run in the processor, and when executed by the processor, the program or instruction implements the steps of the recipe recommendation method provided in the first aspect.

The recipe recommendation apparatus provided in the present application comprises a memory, a processor, and a program or an instruction stored in the memory. When the program or instruction is executed by the processor, the steps of the recipe recommendation method according to the first aspect described above can be implemented. Therefore, the recipe recommendation apparatus has all the beneficial effects of the above recipe recommendation method, which will not be repeated here.

According to a fourth aspect of the present application, a computer-readable storage medium is provided, and a program or an instruction is stored in the computer-readable storage medium. When the program or instruction is executed by a processor, the recipe recommendation method according to any one of the above technical solutions is implemented.

The computer-readable storage medium provided in the present application stores a program or an instruction therein. When executed by a processor, the program or instruction can implement the recipe recommendation method according to any one of the above technical solutions, therefore, the storage medium has all the beneficial effects of the aforementioned recipe recommendation method, which will not be repeated here.

In the description of the present application, the term of "a plurality of" indicates two or more than two, unless otherwise explicitly defined. The orientation or position relationships indicated by terms such as "upper" and "lower" are based on the orientation or position relationships shown in the accompanying drawings, and are only for the convenience of describing the present application and simplifying the description, and do not indicate or imply that the indicated device or element must have a specific orientation and be constructed and operated in a specific orientation. Therefore, they shall not be construed as limitations on the present application. Terms such as "connect", "install" and "fix" shall be understood in a broad sense. For example, "connect" may be a fixed connection, a detachable connection, or an integral connection; it may be a direct connection or an indirect connection through an intermediate medium. For those of ordinary skill in the art, the specific meanings of the above terms in the present application can be understood according to specific circumstances.

In the description of the present application, the description of the terms of "an embodiment", "some embodiments", "specific embodiment" and the like is intended to mean that the specific features, structures, materials or characteristics described in combination with the embodiments or examples are comprised in at least one embodiment or example of the present application. In the description, the illustrative expression of the above terms may not indicate the same embodiment or example. In addition, the described specific features, structures, materials or characteristics may be combined with each other in an appropriate method in one or more of any embodiments or examples.

The above-mentioned are merely some embodiments of the present application and are not intended to limit the present application, and for one skilled in the art, various modifications and changes may be made to the present application. Any modifications, equivalent substitutions, improvements and so on should be covered within the scope of protection of the present application.

## Claims

1. A recipe recommendation method, comprising:
obtaining preparation condition information for a cooking process;
obtaining first demand information of a user; and
generating a recommendation list based on the preparation condition information and the first demand information,
wherein the preparation condition information comprises at least one of cooking device type information, food ingredient type information, and food ingredient remaining amount information for the cooking process.

2. The recipe recommendation method according to claim 1, wherein, the recommendation list comprises a first recommendation list, and the generating the recommendation list based on the preparation condition information and the first demand information comprises:
generating a recipe list based on the preparation condition information;
determining first keywords based on the first demand information; and
generating the first recommendation list based on the first keywords and the recipe list.

3. The recipe recommendation method according to claim 2, wherein, the generating the first recommendation list based on the first keywords and the recipe list comprises:
determining second keywords conflicting with the preparation condition information among the first keywords;
obtaining confirmation information input by the user in a case that the second keywords are obtained;
generating the first recommendation list based on the first keywords and the recipe list in a case that the confirmation information is obtained;
deleting the second keywords from the first keywords in a case that the confirmation information is not obtained; and
generating the first recommendation list based on remaining first keywords and the recipe list.

4. The recipe recommendation method according to claim 2, wherein, the determining the first keywords based on the first demand information comprises:
determining the first keywords corresponding to the first demand information from a preset keyword list based on the demand information.

5. The recipe recommendation method according to claim 2, wherein, the determining the first keywords based on the first demand information comprises:
inputting the first demand information into a pre-trained deep learning algorithm to generate the first keywords corresponding to the first demand information.

6. The recipe recommendation method according to claim 2, wherein, the recommendation list further comprises a second recommendation list, and after the generating the first recommendation list based on the first keywords and the recipe list, the recipe recommendation method further comprises:
obtaining second demand information of the user;
determining third keywords based on the second demand information in a case that the second demand information input by the user is received;
generating the second recommendation list based on the third keywords and the recipe list; and
stopping obtaining the second demand information in a case that the user has determined a target recipe from the first recommendation list.

7. The recipe recommendation method according to any one of claims 1 to 6, wherein, the generating the recommendation list based on the preparation condition information and the first demand information, the recommendation method further comprises:
obtaining historical cooking information of the user;
determining a priority of recipes in the recommendation list based on the historical cooking information; and
sorting the recipes in the recommendation list by the priority.

8. The recipe recommendation method according to claim 7, wherein, the determining the priority of the recipes in the recommendation list based on the historical cooking information comprises:
constructing a historical cooking information matrix based on the historical cooking information; and
inputting the historical cooking information matrix into a preset algorithm to generate the priority of the recipes in the recommendation list.

9. The recipe recommendation method according to any one of claims 1 to 6, wherein, the obtaining the first demand information of the user comprises:
obtaining voice information input by the user;
converting the voice information into text information; and
determining the first demand information based on the text information.

10. A recipe recommendation apparatus, comprising:
an obtaining unit configured to obtain preparation condition information for a cooking process; and obtain first demand information of a user;
a generating unit configured to generate a recommendation list based on the preparation condition information and the first demand information;
wherein the preparation condition information comprises at least one of cooking device type information, food ingredient type information, and food ingredient remaining amount information for the cooking process.

11. A recipe recommendation apparatus, comprising:
a processor and a memory, wherein the memory stores a program or an instruction which runs in the processor, and when executed by the processor, the program or instruction implements steps of a recipe recommendation method according to any one of claims 1 to 9.

12. A computer-readable storage medium, wherein, a program or an instruction are stored in the computer-readable storage medium, and when executed by a processor, the program or instruction implement steps of a recipe recommendation method according to any one of claims 1 to 9.
